# FASCICULE DE BREVET EUROPEEN

(11) **EP 0 516 039 B1**
(45) Date de publication et mention de la délivrance du brevet: **22.09.1999**
(21) Numéro de dépôt: 92108838.1
(22) Date de dépôt: 26.05.1992
(51) Int. Cl.: H01Q 25/00, H01Q 1/28, H04B 7/26

(54) **Système de communications par satellites en orbite basse à destination de terminaux mobiles**
Kommunikationssystem mit Hilfe von Satelliten in niedriger Umlaufbahn zu Mobilstationen
Communication system by means of satellites in low orbit to mobile stations

(30) Priorité: 31.05.1991 FR 9106591
(43) Date de publication de la demande: 02.12.1992
(73) Titulaire: ALCATEL, 75008 Paris (FR)
(72) Inventeur: Rouffet, Denis, F-92100 Boulogne Billancourt (FR); Tanguy, Yannick, F-75015 Paris (FR); Berthault, Frédéric, F-75015 Paris (FR)
(74) Mandataire: Smith, Bradford Lee

(56) Documents cités:
- EP-A- 0 398 555
- INTERNATIONAL CONFERENCE ON COMMUNICATIONS 1981 vol. 3, Juin 1981, DENVER,COLORADO pages 5431 - 5434; JOHN M. RUDDY: 'A NOVEL NON-GEOSTATIONARY SATELLITE COMMUNICATIONS SYSTEM'
- IEEE TRANSACTIONS ON GEOSCIENCE AND REMOTE SENSING. vol. 28, no. 4, Juillet 1990, NEW YORK US pages 614 - 619; LE VINE ET AL.: 'Initial Results in the Development of a Synthetic Aperture Microwave Radiometer'

## Description

L'invention concerne un système de communications par satellites en orbite basse à destination de terminaux mobiles.

Les communications par satellites avec des terminaux mobiles étudiées jusqu'à présent utilisaient deux types d'orbites : les orbites des satellites géostationnaires ou des orbites elliptiques fortement inclinées ayant toutes deux la propriété d'être situées, en moyenne, au dessus de zones dans l'espace à forte concentration de particules, appelées "ceintures de Van Allen". Depuis peu des orbites plus basses ont été considérées. Leur altitude se situe entre 800 et 2000 Km. Une des caractéristiques des systèmes de communications par satellites qui utilisent de telles orbites est la possibilité de communiquer avec un nombre important de terminaux mobiles, par exemple du type portatifs. Mais les faibles performances radio-électriques de ces terminaux obligent à prévoir une compensation obtenue avec des performances radio-électriques supérieures du satellite.

La différence entre les orbites d'altitude supérieure aux "ceintures de Van Allen" et celles d'altitude inférieure réside dans une atténuation d'espace d'autant plus faible que le satellite est proche de la terre. Cependant, il est possible de compenser l'atténuation d'espace en jouant sur la taille des antennes des satellites. Cette compensation a cependant des limites. Pour des communications avec des terminaux mobiles ces limites sont dépassées : Les antennes des satellites sur orbites basses fournissent des gains plus faibles ; Etant donné la géométrie des systèmes de communications par satellites qui utilisent ces orbites, ces antennes doivent compenser des variations de trajet de beaucoup supérieure à celles rencontrées avec des orbites plus élevées.

Un rapport du CCIR (document numéro US IWP 8/14-52 ; 1er Août 1990) intitulé "Technical characteristics of a personnal communication mobile satellite system" décrit un système de communications par satellites à orbite basse avec des antennes multifaisceaux ; chacune comportant 37 faisceaux coniques. Un tel système a le grand inconvénient de présenter un grand nombre de pinceaux qui forment, chacun, une petite trace à terre. De plus, du fait même de la mobilité des utilisateurs et du défilement des satellites, des changements de pinceaux peuvent se produire au cours du temps. Ceux-ci s'accompagnent généralement d'un changement de ressources ("hand-over"). Leur nombre élevé au cours d'une conversation constitue un phénomène préjudiciable à la qualité de la liaison et au confort d'écoute.

L'article intitulé "A novel non-geostationary satellite communications system" de J.M. Ruddy paru dans International Conference on Communications, vol.3, juin 1981, pages 54.3.1 à 54.3.4, décrit un système de communication par satellites pour mobiles fixes. Les antennes embarquées à bord de satellites à défilement sont classiques.

L'objet de la présente invention est de pallier ces inconvénients en décrivant un système de communication qui permette d'améliorer de façon très importante la capacité des satellites.

Elle propose à cet effet un système de communications par satellites en orbite basse à destination de terminaux mobiles telle que décrit dans la revendication 1.

Dans une réalisation avantageuse les pinceaux de chaque couverture sont allumés selon un balayage spatial dit "beam hopping" ; l'émission et la réception étant synchronisées pour chaque satellite et pour chaque terminal mobile.

Dans une autre réalisation avantageuse un duplexage temporel est utilisé ; l'émission et la réception, pour chaque satellite et pour chaque terminal mobile, étant séparées dans le temps et synchronisées.

Avantageusement un tel système permet de faire passer la capacité d'un satellite d'environ 500 kg d'à peine 60 canaux (géostationnaire) à plus de 5000 canaux en orbite basse. De plus ce système de communication présente une configuration simple. Il permet un fonctionnement avec des orbites polaires et avec des orbites inclinées. Il permet de limiter le brouillage, dans le cas d'orbites inclinées, quel que soit le type d'accès utilisé. Il permet, enfin, une optimisation du fonctionnement des antennes de chaque satellite.

Avantageusement les satellites utilisés dans le système de l'invention peuvent emporter une charge utile comportant :
- une antenne de liaison vers une station fixe de connexion avec les réseaux de terre ;
- un circuit de duplexage qui sépare l'émission de la réception, ainsi que les sens de polarisation ;
- un ensemble de circuits assurant la réception des signaux provenant des stations de connexion aux réseaux de terre ;
- un ensemble de filtres et de circuits de transposition de fréquences vers la bande de fréquences de la liaison satellite vers terminaux mobiles, qui contrôle également le gain de la chaîne d'émission vers les mobiles ;
- un amplificateur multiport ;
- un ensemble d'antennes de communication vers les terminaux mobiles ;
- un ensemble de récepteurs et de mélangeurs transposant la fréquence de la liaison terminal mobile-satellite à celle de la liaison satellite-stations de connexion aux réseaux de terre ;
- un circuit de multiplexage fréquentiel et/ou temporel ;
- un circuit d'amplification de puissance de la liaison satellite-stations de connexion qui comporte également un filtre de sortie par sens de polarisation.

Les caractéristiques et avantages de l'invention ressortiront d'ailleurs de la description qui va suivre, à titre d'exemple non limitatif, en référence aux figures annexées sur lesquelles :
- la figure 1 représente une couverture dans un système de communications par satellites de l'art connu ;
- la figure 2 illustre le système de communications par satellites de l'invention ;
- les figures 3 à 6 sont des vues schématiques illustrant le fonctionnement du système de communications par satellites selon l'invention ;
- la figure 7 illustre la charge utile d'un satellite dans le système de communications selon l'invention ;
- la figure 8 illustre les performances antenne d'un satellite dans le système de communications selon l'invention.

Dans un système de communications par satellites il y a deux classes d'orbites basses possibles :
- les orbites polaires ; dont le plan passe par les pôles (ou quasi-polaire pour prendre en compte le cas des orbites héliosynchrones ; c'est-à-dire dont le plan reste fixe dans l'espace). Ces orbites ont, en principe, la propriété de garantir une couverture permanente et globale de la terre ;
- les orbites inclinées ; dont le plan fait un angle donné, en pratique inférieur à 60°, avec le plan de l'équateur. La couverture permanente est alors composée de deux bandes de frontières parallèles à l'équateur et symétriques par rapport à celui-ci.

Chaque type d'orbite a des points d'intersection avec les plans d'orbite. Dans le cas des orbites polaires, la zone d'intersection de celles-ci est voisine des pôles. Dans le cas des orbites inclinées, cette zone est voisine de l'équateur. Par ailleurs, la zone de service d'un satellite est définie par une condition géométrique : C'est l'ensemble des points de la terre d'où le satellite est vu avec une élévation (angle que fait la direction utilisateur-satellite avec le plan tangent à la terre à l'endroit du terminal mobile) supérieure à une valeur prédéterminée (la valeur pratique est comprise entre 10° et 15°).

Ces deux types d'orbites présentent la même propriété : les zones de service de chaque satellite se recouvrent à des instants ou à des endroits différents :
- dans le cas d'orbites polaires, c'est en allant vers les pôles que les zones de service de chaque satellite se recouvrent peu à peu ;
- dans le cas des orbites inclinées, la description du phénomène de recouvrement est plus complexe, mais dans certaines zones elle peut atteindre 100%. Il y a même des constellations de satellites qui assurent dans certaines zones une couverture quadruple.

Une telle propriété est avantageuse, car elle permet d'établir des communications avec au moins deux satellites dans la plupart des cas. La conception du système selon l'invention tient compte de ces couvertures multiples pour éviter des brouillages entre couvertures : Un brouillage se caractérise par la superposition de plusieurs signaux, un qui est le signal "souhaité", les autres, brouilleurs, qui peuvent géner ou empêcher la bonne réception du signal souhaité. Le mode d'accès à ces satellites en orbite basse tient également compte de ce problème de brouillage.

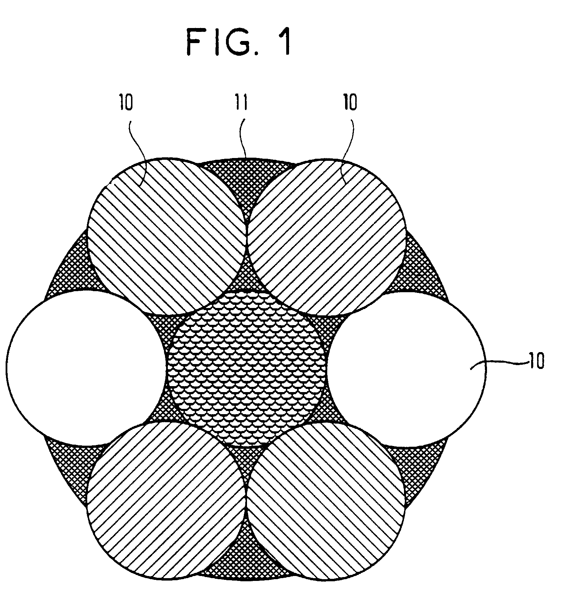

Dans un système de communications par satellites de l'art connu, tel que celui défini précédemment, on réalise à terre une zone de couverture à l'aide de plusieurs pinceaux 10 comme représenté sur la figure 1 : la couverture utile obtenue étant la zone 11. Une telle couverture présente plusieurs inconvénients : Elle présente, dans le trajet satellite vers mobile, plusieurs zones dans lesquelles les puissances de brouillage sont très importantes. Ces zones, tant en AMRT (accès multiple à répartition dans le temps) qu'en AMRC (accès multiple à répartition par codage), sont dimensionnantes, c'est-à-dire qu'elles participent très largement à la taille, au poids et au coût du satellite considéré. Si les orbites sont de plus inclinées, ces brouillages peuvent conduire à des coupures de liaison pendant plusieurs dizaines de secondes. De plus, une telle couverture à l'aide de pinceaux fins nécessite des changements de ressources assez fréquents. Dans un système où le nombre de pinceaux est important, ceci conduit à avoir un changement de ressource par exemple toutes les minutes. La charge de traitement induite au sol est alors loin d'être négligeable.

Par ailleurs, tant en AMRC où l'effet de proximité ("near-far effect") peut être important, qu'en AMRT/AMRF ou en AMRF (accès multiple à répartition en fréquence), où est connu l'effet néfaste des porteuses de fortes amplitudes sur celles qui sont moins puissantes, il est souhaitable de disposer d'un gain d'antenne conduisant au sol à une puissance reçue (par unité de surface) aussi uniforme que possible.

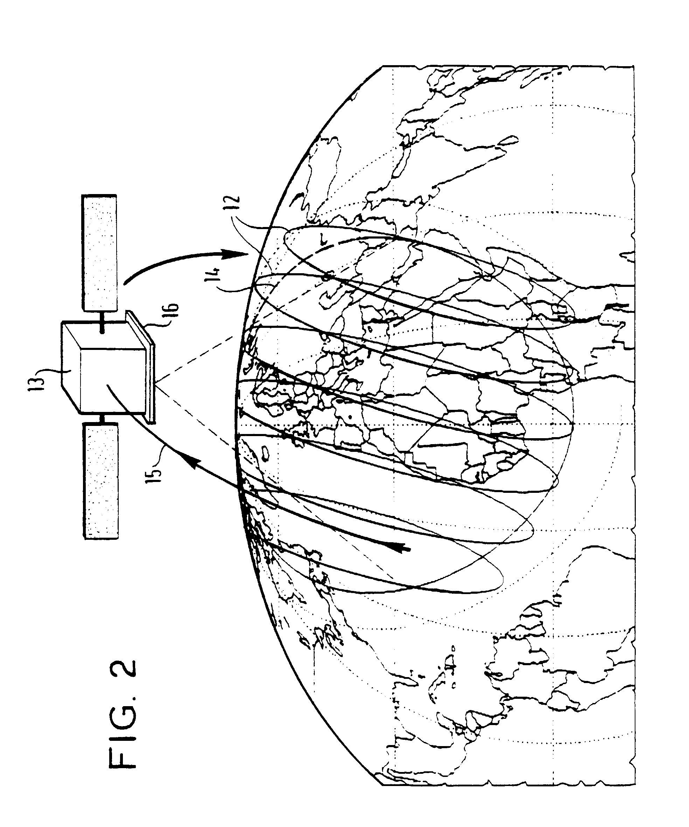

Au même titre que les systèmes terrestres de radiocommunications avec les mobiles, le système à satellites de l'invention, tel que représenté sur la figure 2, est un système cellulaire pour lequel les cellules de plus grande dimension, sont constituées par la trace au sol des différents pinceaux 12 de couverture de chaque satellite multifaisceaux 13. D'un point de vue radioélectrique, une cellule se caractérise par un ensemble de ressources (fréquences, intervalles de temps, codes), dans lequel le terminal mobile vient puiser un élément lors de l'établissement d'une communication.

Le système selon l'invention est un système par exemple à 6 pinceaux, au lieu de 37 dans le cas du système décrit dans le rapport CCIR présenté précédemment. Le nombre de "hand-over" est donc divisé, ipso-facto, par le rapport des nombres de pinceaux : soit par un facteur 6 environ. Pour assurer une couverture globale identique 14, chacun des pinceaux 12 doit donc couvrir une surface au sol plus grande, ce qui se traduit par la définition d'une antenne 16 unique et de faibles dimensions.

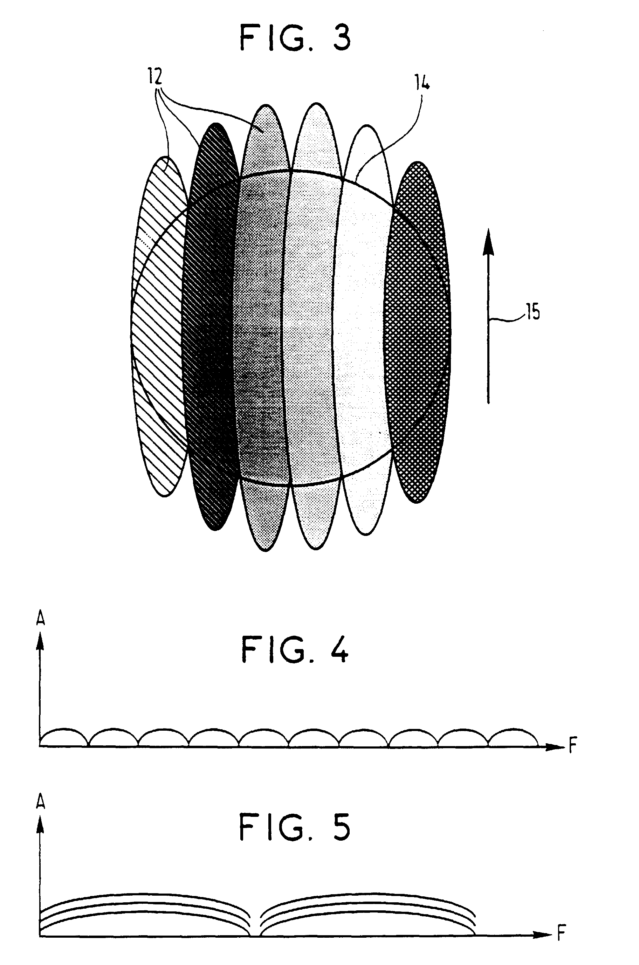

De plus dans ce système la forme géométrique des pinceaux 12 a été modifiée : de circulaires ils sont devenus elliptiques allongés comme représenté sur la figure 3. On a ainsi accru sensiblement le temps de communication sans "hand-over" ; Le grand ce de l'ellipse étant disposé parallélement au sens 15 de défilement du satellite. De cette manière, tant que l'utilisateur reste en visibilité du satellite il est éclairé de façon continue par le même pinceau tout au long de la communication.

L'adoption d'un nombre restreint de pinceaux elliptiques allongés apporte donc une plus-value certaine au niveau système : la complexité de plusieurs sous-systèmes est réduite (charge utile, antenne) et la gestion de certaines fonctions s'en trouve simplifiée au niveau global (gestion des communications et des ressources). Il s'en suit donc une plus grande souplesse et une plus grande disponibilité du système de communications avec les terminaux mobiles.

De plus, le système de l'invention peut utiliser conjointement les techniques de multiplexage temporel (TDD) et le "saut de pinceaux" (Beam-hopping) : Les M spots de couverture au sol sont éclairés successivement et séquentiellement en formant des groupes de P spots choisis parmi les N spots.

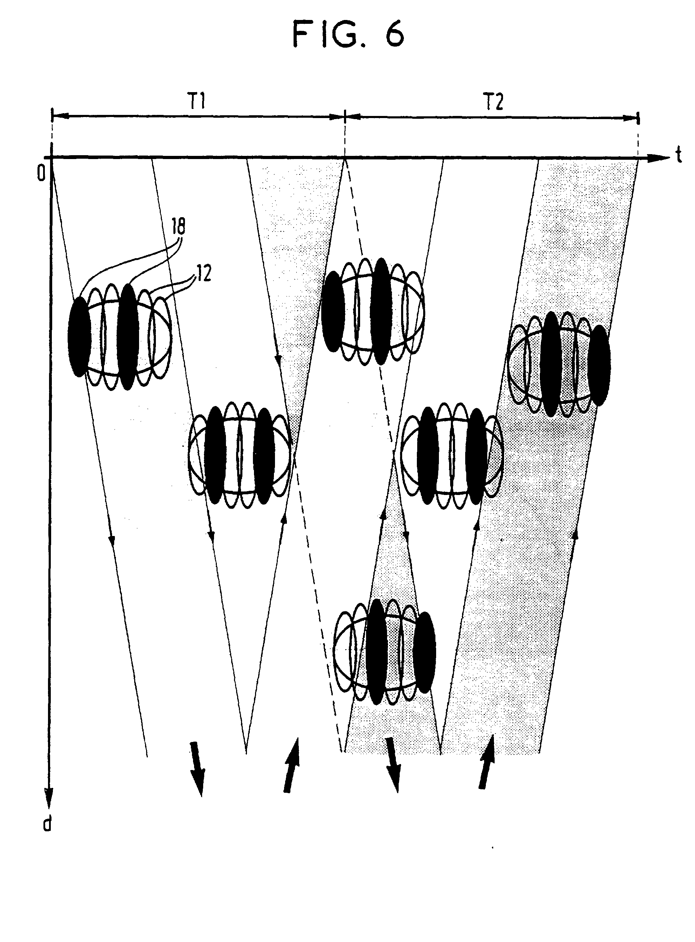

Dans l'exemple illustré par les figures 2 et 3 on éclaire successivement un groupe de 2 spots 18 choisis parmi les 6 spots du satellite, séquentiellement suivant 6/2=3 pas de temps. Cette opération est réalisée aussi bien en émission qu'en réception ce qui conduit naturellement a une trame de transmission comportant au total 6 intervalles de temps (3 pour l'émission vers le mobile et 3 pour la réception vers le satellite), comme illustré sur la figure 6.

En effet dans le cas d'un système multipinceaux il y a deux moyens de s'affranchir des brouillages entre pinceaux voisins rattachés à un même satellite :
- chacun des pinceaux est éclairé en permanence et la limitation des brouillages entre pinceaux est possible grâce à un schéma de réutilisation de fréquences. Toute la bande disponible n'est pas alors utilisée dans un pinceau.
- toute la bande disponible est utilisée dans un pinceau. La technique qui permet de s'affranchir du brouillage entre pinceaux voisins est le balayage spatial ou "saut de pinceau" (beam-hopping). Sont éclairés simultanément les pinceaux suffisamment éloignés spatialement tels que leurs niveaux d'interférences mutuels soient acceptables.

En ce qui concerne la limitation du brouillage entre pinceaux de satellites différents : Lorsque deux satellites ou plusieurs se croisent ou se rapprochent leurs traces au sol se recouvrent plus ou moins partiellement. Ces événements se rencontrent relativement fréquemment dans un système multifaisceaux. D'autre part des brouillages supplémentaires peuvent résulter de phénomènes de propagation transhorizon. Ces brouillages aléatoires ne peuvent, dans ce cas, être limités que par la technique du "beam hopping". Cette technique de balayage spatial combinée avec l'utilisation de spots elliptiques allongés est donc la meilleure solution possible pour ce type de brouillage. La forme allongée des pinceaux 12 permet de plus de réduire la surface de recouvrement des traces des différents satellites comme cela est illustrée à la figure 3. Cette solution a en outre le mérite d'être compatible avec les différents schémas de transmissions utilisables et permet aussi une simplification importante de l'antenne.

Parmi tous les modes d'accès existant, plusieurs modes forment un compromis judicieux entre les performances (nombre de canaux) et la complexité (donc le coût) du démodulateur. Il s'agit de modes utilisant soit une séparation des signaux par la fréquence (AMRF), soit une séparation par le temps ( AMRT) soit une séparation par le code ( AMRC) soit des modes hybrides : une combinaison AMRC-AMRT par exemple.

Les modes d'accès les plus avantageux sont ceux qui peuvent être compatibles avec les modes utilisés par les réseaux cellulaires de terre. Ils sont au nombre de trois :
. Le mode d'accès à répartition en fréquence (AMRF) utilise un duplexage en fréquence. Il nécessite quatre bandes de fréquences pour établir une liaison : deux bandes de fréquences pour établir les liaisons entre le terminal mobile et le satellite, deux bandes de fréquences pour établir les liaisons entre le satellite et les stations fixes des réseaux de terre (liaisons de connexion).
   On peut atteindre une capacité légèrement inférieure à 40 porteuses par MHz et par pinceau fin (de type GSM demi-débit, ou de signal de parole codée à 4800 bits/seconde).
. Le mode d'accès à répartition dans le temps (AMRT) a ceci de particulier qu'il augmente le débit de façon telle qu'un utilisateur donné n'ait accès au satellite que pendant une durée courte qui lui a été pré-assignée. Dans le système selon l'invention on utilise plusieurs porteuses par bande de fréquence de telle façon que le débit ne soit pas trop élevé. Le débit choisi est celui du réseau cellulaire à terre que le système à satellites complète. Par exemple en Europe on choisit de préférence le débit du réseau GSM (norme européenne ETSI), aux Etats Unis celui du réseau DAMPS (norme numérique USA).

Dans ce type d'accès, la bande de fréquence utilisée par chaque porteuse étant supérieure à l'effet Doppler, on utilise un "saut de pinceau". Cependant ce saut de pinceau impose une synchronisation entre l'émission et la réception, tant pour le satellite que pour le mobile. Suivant les bandes de fréquences qui sont disponibles pour le mobile plusieurs solutions sont alors possibles :
- Dans le cas classique où deux bandes de fréquences sont disponibles pour les trajets terminal mobile-satellite, il est possible de simplifier la structure du terminal en utilisant une émission et une réception toujours séparées dans le temps (cette technique s'appelle "duplexage temporel" et est notée "TDD"). Le principe de l'accès retenu alors est donc le suivant : pour établir une communication on attribue une ressource fréquentielle (choix d'une fréquence porteuse), puis à l'intérieur de cette ressource on définit des instants d'émission. La synchronisation doit être garantie par le terminal et la station de connexion. Elle s'effectue tout d'abord dans un canal spécifique puis dans le canal de transmission, où le changement d'instant d'émission se fait par incrément.
- Dans le cas d'une seule bande de fréquences pour les liaisons terminal mobile-satellite, le fonctionnement en TDD pour les terminaux mobiles et le satellite est obligatoire. Ce qui conduit à une charge utile du satellite particulièrement simple. La synchronisation de l'émission du terminal mobile se fait en utilisant tout d'abord un canal spécifique puis en utilisant une procédure en boucle fermée, qui incrémente ou décrémente l'instant d'émission.

Dans ce cas, comme dans le précédent, une gestion centralisée des ressources en fréquence permet de limiter les brouillages. De plus, il n'est pas exclu que des changements de ressources ("hand-over") rapides aient à être faits. Mais le système de l'invention est appelé à compléter un réseau de terre qui possède déjà ces fonctionnalités. Cette gestion repose sur le principe suivant : à partir d'une certaine altitude du satellite, les zones géographiques où il y a possibilités de brouillages sont limitées. Dans ces zones seules il y a un partage des ressources spectrales. Dans toutes les autres un terminal mobile peut avoir accès à la totalité du spectre. Néanmoins, il est possible de trouver un remède aux brouillages sans avoir recours à une gestion complètement centralisée du système en utilisant un saut de fréquence lent ; de telle sorte que, s'il y a brouillage, ce ne soit que pendant un temps court.

La capacité qu'il est alors possible d'atteindre est légèrement inférieure à 35 porteuses par MHz. (Cette capacité semble inférieure à celle mentionnée en AMRF. Mais il faut tenir compte du fait qu'il n'y a qu'une seule bande de fréquences : ce type de système a en fait une capacité pratiquement double). Le principal avantage de ce type de système est qu'il permet d'utiliser une charge utile satellite très simple.
. Le mode d'accès à répartition par code (AMRC), autrement appelé "étalement de spectre", permet de donner une solution décentralisée aux problèmes de brouillage. L'emploi d'un étalement de spectre permet, en effet, la superposition de plusieurs porteuses, provenant d'un ou de plusieurs satellites. Ce mode peut être utilisé soit avec un accès de type FDD (l'émission et la réception ayant des bandes de fréquence différentes), soit avec un accès de type TDD. Sur les figures 4 et 5 sont schématiquement représentées des courbes amplitude/fréquence avec deux possibilités d'accès TDD; suivant que l'accès se fait avec une séparation des porteuses par le temps ou le code. Rien, en effet, n'empêche d'utiliser un accès de type AMRT, ou un type d'accès AMRC.

- Dans le cas de deux bandes de fréquence pour les liaisons terminal mobile-satellite les deux types d'accès FDD ou TDD sont possibles. Une solution de type TDD permet de diminuer le taux de brouillage provenant des couvertures multiples dans le cas des orbites inclinées. En effet, quand il y a superposition de couvertures, il y a localement une dégradation de la capacité, qui peut être compensée par un dispositif de contrôle de puissance. Un tel dispositif est utile essentiellement sur le trajet satellite-terminal mobile. Il permet de garantir à chaque usager une qualité de communication minimale. En effet en situation de couverture multiple, certains usagers sont pénalisés par une puissance de brouillage trop importante. Par contre si ce brouillage n'est pas trop important, il est possible d'augmenter la puissance satellite destinée à ces usagers : L'augmentation de puissance totale résultante est en principe minime. Mais elle a un impact sur la qualité de liaison des autres usagers qui voient alors leur puissance de brouillage augmenter. L'emploi d'un dispositif de contrôle de puissance a donc des limites qu'il ne faut pas dépasser.
- Comme dans le cas de l'AMRT, il est possible de fonctionner avec une seule bande de fréquences. Dans ce cas, le processus d'accès est de type TDD. Cependant l'étalement de spectre pose quelques problèmes spécifiques. La démodulation de signaux étalés spectralement suppose que le récepteur est capable de retrouver la référence temporelle qui a été utilisée à l'émission. Deux méthodes sont alors utilisables : soit reconstruire la référence de temps à partir des signaux reçus : Mais l'emploi de codes longs, rendus nécessaires par le nombre d'utilisateurs présents simultanément dans le système, fait que cette technique est très complexe d'emploi ; soit conserver en mémoire la référence de temps, puis à partir d'estimation des variations qu'elle peut avoir entre la réception de deux paquets, la reconstituer lors de la réception.

Le principal problème des accès TDD est l'acquisition initiale de la synchronisation d'émission. Cette synchronisation est effectuée tout d'abord en boucle ouverte puis en boucle fermée à l'aide de la station qui contrôle le réseau. Dans un premier temps, un terminal mobile acquiert le canal de signalisation du réseau. Puis, s'il doit transmettre, envoit un premier message dont la réception permet de définir le décalage temporel qu'il convient d'appliquer pour être parfaitement synchronisé. Cette synchronisation en boucle étant faite et le mobile synchronisé, la poursuite et le contrôle de cette synchronisation est obtenue par la mesure de cette synchronisation faite dans la station terrienne assurant l'interface avec les réseaux téléphoniques commutés. Il y a toutefois un cas particulièrement simple de fonctionnement TDD où ce processus n'a pas besoin d'être appliqué, et où la réception seule des signaux par le terminal mobile suffit à fournir des informations de synchronisation, c'est le cas où seul le terminal mobile fonctionne en TDD.

Dans ce cas, le terminal mobile a un fonctionnement bi-fréquence, mais à l'alternat. Dès qu'il reçoit un signal en provenance du satellite, il émet. Côté satellite, les différences de distance aidant, il n'est pas possible de recevoir tous les signaux en provenance des terminaux dans un même pinceau simultanément. L'émission satellite est tramée avec saut de pinceau, c'est-à-dire qu'elle se fait alternativement par moitié du nombre des pinceaux, chaque pinceau émettant étant séparé d'un autre par un pinceau n'émettant pas. Au pas de temps suivant, c'est l'inverse. Cependant la réception du satellite ne peut qu'être permanente du fait de la dispersion temporelle provenant de la dispersion des distances. L'accès en code est sensible à la dispersion d'amplitude des différentes porteuses à la même fréquence. Des codes parfaitement orthogonaux (par exemple des codes de Walsh-Hadamard) et parfaitement synchronisés sont utilisés pour que cet effet ne soit pas sensible. Mais la synchronisation n'est jamais parfaite avec des satellites en orbite basse, même si elle peut être très bonne. La forme de la couverture obtenue à l'aide des antennes satellites est donc très importante si l'on souhaite éviter ce qui est connu sous le nom de "near-far problem". En d'autres termes les porteuses de forte amplitude brouillent beaucoup plus que les porteuses de faible amplitude. Dans un système fonctionnant correctement, toutes les porteuses sont donc ramenées à un niveau aussi voisin que possible.

Par contre quand on ne dispose que d'une seule bande de fréquences il est nécessaire de fonctionner à l'alternat. Ce mode de fonctionnement a déjà été décrit. La figure 6, qui donne le principe du fonctionnement du TDD monofréquence pour une distance d par rapport au satellite en fonction du temps t avec une période émission T1 et une période réception T2, décrit le mode de fonctionnement du système quand il est associé à un saut de pinceau ; la couverture étant, ici, obtenue à l'aide de six pinceaux elliptiques 12 ; deux pinceaux 18 étant allumés en même temps. La trame a été conçue, sans que ce soit une contrainte particulière, de sorte que la durée de trajet maximale soit celle qui corresponde à l'émission d'un pinceau. Toutefois, il peut être démontré que cette durée est limitée (à environ deux fois la durée du trajet maximal) si l'on souhaite utiliser la trame de façon optimale.

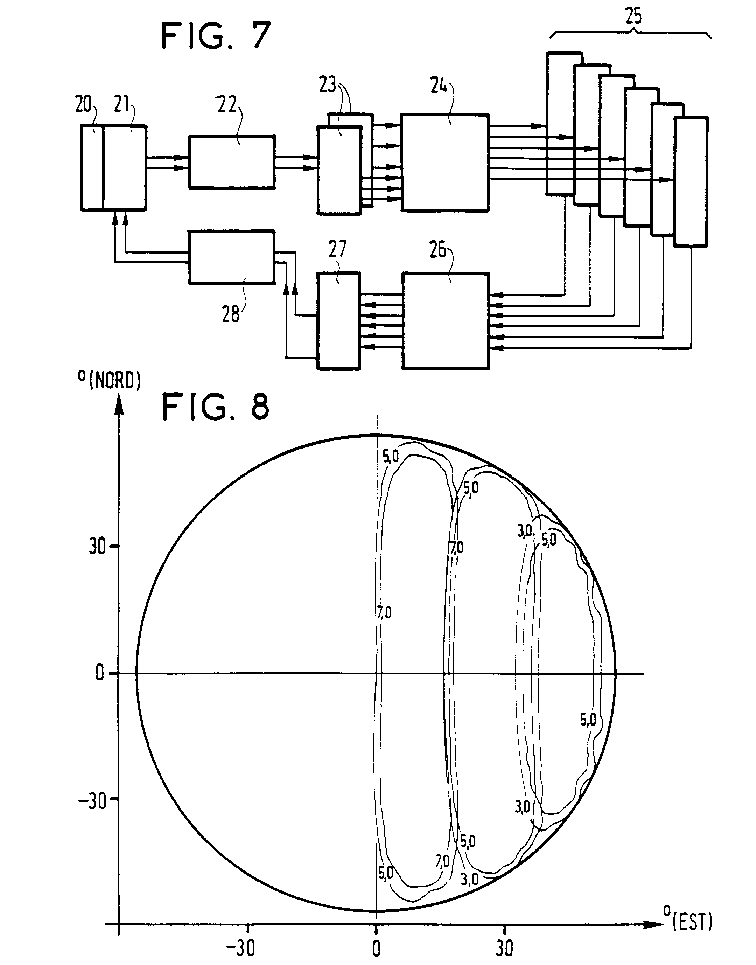

Dans le système selon l'invention la charge utile peut être réalisée de façon très avantageuse, tel que représenté, sous la forme d'un schéma bloc, à la figure 7. Cette figure rend compte des deux possibilités de charge utile mono ou bi-fréquence pour les liaisons terminal mobile-satellite.

Cette charge utile comporte :
- une antenne 20 de la liaison de connexion vers une station fixe de connexion aux réseaux de terre. Le plus souvent se sera un cornet. Il est toutefois possible d'avoir un autre type d'antenne si le besoin s'en fait sentir ;
- un circuit de duplexage 21. Il sépare l'émission de la réception, ainsi que les sens de polarisation ;
- un ensemble 22 de circuits assurant la réception des signaux provenant des stations de connexion aux réseaux de terre ;
- un ensemble 23 de filtres et de circuits de transpositions de fréquences vers la bande de fréquences de la liaison satellite vers terminaux mobiles. Cet ensemble contrôle également le gain de la chaîne d'émission vers les terminaux mobiles. Dans le cas où un saut de pinceau est nécessaire, la commutation se fait dans cet ensemble. Il peut également contenir la base de temps ultra stable nécessaire au fonctionnement du système. Cette base de temps commande l'alimentation des amplificateurs de puissance, qui, lorsque le satellite fonctionne en TDD, sont mis sous tension puis éteints à des moments qui conviennent de façon à économiser l'énergie ;
- un amplificateur multiport 24. Il comporte classiquement N entrées, une matrice de diviseurs de type Buttler ou autre, P amplificateurs, une matrice de combineurs inverse de la matrice d'entrée ;
- un ensemble 25 d'antennes de communication. Ce sont des antennes en réseau plan de sources par exemple à rayonnement direct vers les terminaux mobiles. Avant chaque entrée est disposé un filtre et un circulateur permettant de pouvoir utiliser l'antenne à l'émission et à la réception si elle doit fonctionner dans la même bande de fréquence. Si tel n'est pas le cas, soit l'antenne est double soit ses éléments rayonnants sont bi-fréquence ;
- un ensemble 26 de récepteurs et de mélangeurs transposant la fréquence de la liaison terminal mobile-satellite à celle de la liaison satellite/stations de connexion aux réseaux de terre ;
- un circuit 27 de multiplexage fréquentiel, temporel ou les deux suivant le cas considéré. Y sont combinés tous les signaux devant être transmis sur un sens de polarisation ;
- un circuit 28 d'amplification de puissance de la liaison satellite-station de connexion. Il comporte également un filtre de sortie par sens de polarisation.

Les courbes représentées à la figure 8 illustrent les performances antennes vues du satellite (pour une couverture telle que représentée à la figure 3), ces courbes étant données en isoflux avec une référence commune qui est le centre de la terre ; le gain (en dB) représenté (3.0 ;5.0 ; 7.0) étant diminué de l'atténuation due à la distance. Sur cette figure seulement trois pinceaux sont représentés ; les trois autres, non représentés, pouvant être obtenus par symétrie par rapport à un axe de symétrie vertical.

Il est bien entendu que la présente invention n'a été décrite et représentée qu'à titre d'exemple préférentiel et que l'on pourra remplacer ses éléments constitutifs par des éléments équivalents sans, pour autant, sortir du cadre de l'invention.

## Revendications

1. Système de communications comprenant une pluralité de satellites en orbite basse et une pluralité de terminaux mobiles, chaque satellite (15) comprenant au moins une antenne afin d'établir une couverture isoflux au sol composée d'une pluralité de pinceaux (12) elliptiques, tous allongés dans le sens de défilement dudit satellite afin de minimiser le nombre de changements de ressources ("hand-over") au cours d'une conversation.

2. Système de communications selon la revendication 1, caractérisé en ce que les pinceaux (12) de chaque couverture (14) sont allumés selon un balayage spatial dit "beam-hopping", et en ce que pour chaque satellite et pour chaque terminal mobile l'émission et la réception sont synchronisées.

3. Système de communications selon l'une quelconque des revendications 1 ou 2, caractérisé en ce qu'un duplexage temporel est utilisé ; et en ce que pour chaque satellite et pour chaque terminal mobile l'émission et la réception sont séparées dans le temps et synchronisées.

4. Système de communication selon l'une quelconque des revendications 1 à 3, caractérisé en ce que l'émission et la réception ont des bandes de fréquences différentes.

5. Système de communications selon l'une quelconque des revendications précédentes, caractérisé en ce que le mode d'accès aux satellites est un mode AMRF.

6. Système de communications selon l'une quelconque des revendications 1 à 4, caractérisé en ce que le mode d'accès aux satellites est un mode AMRT.

7. Système de communications selon l'une quelconque des revendications 1 à 4, caractérisé en ce que le mode d'accès aux satellites est un mode AMRC.

## Patentansprüche

1. Kommunikationssystem mit einer Mehrzahl von Satelliten in niedriger Umlaufbahn und einer Mehrzahl von mobilen Endgeräten, wobei jeder Satellit (15) wenigstens eine Antenne umfasst, um eine Abdeckung mit konstantem Fluss am Boden (isoflux) zu etablieren, die aus einer Mehrzahl von elliptischen Bündeln (12) aufgebaut ist, die alle in Laufrichtung des Satelliten langgestreckt sind, um die Anzahl von Ressourcenwechseln (handover) im Laufe eines Gesprächs zu minimieren.

2. Kommunikationssystem nach Anspruch 1, dadurch gekennzeichnet, dass die Bündel (12) jeder Abdeckung (14) gemäß einer als "beam-hopping" bezeichneten räumlichen Abtastung eingeschaltet werden und dass für jeden Satelliten und jedes mobile Endgerät Senung und Empfang synchronisiert sind.

3. Kommunikationssystem nach einem beliebigen der Ansprüche 1 oder 2, dadurch gekennzeichnet, dass eine zeitliche Duplexierung angewandt wird und dass für jeden Satelliten und für jedes mobile Endgerät Sendung und Empfang zeitlich getrennt und synchronisiert sind.

4. Kommunikationssystem nach einem beliebigen der Ansprüche 1 bis 3, dadurch gekennzeichnet, dass Sendung und Empfang unterschiedliche Frequenzbänder handen.

5. Kommunikationssystem nach einem beliebigen der vorhergehenden Ansprüche, dadurch gekennzeichnet, dass der Zugriffsmodus auf die Satelliten ein FDMA-Modus ist.

6. Kommunikationssystem nach einem beliebigen der Ansprüche 1 bis 4, dadurch gekennzeichnet, dass der Zugriffsmodus auf die Satelliten ein TDMA-Modus ist.

7. Kommunikationssystem nach einem beliebigen der Ansprüche 1 bis 4, dadurch gekennzeichnet, dass der Zugriffsmodus auf die Satelliten ein CDMA-Modus ist.

## Claims

1. A communications system comprising a plurality of low orbit satellites and a plurality of mobile terminals, each satellite (15) comprising at least one antenna in order to establish isoflux coverage of the ground, said coverage being made up of a plurality of elliptical beams (12) that are elongate in the travel direction of said satellite so as to minimize the number of changes in resources ("hand-overs") during the course of a conversation.

2. A communications system according to claim 1, characterized in that the beams (12) of each coverage area (14) are illuminated using beam-hopping space-division scanning, and in that transmission and reception are synchronized for each satellite and for each mobile terminal.

3. A communications system according to claim 1 or 2, characterized in that time division duplexing is used, and in that transmission and reception are separated in time and are synchronized for each satellite and for each mobile terminal.

4. A communications system according to any one of claims 1 to 3, characterized in that transmission and reception occupy different frequency bands.

5. A communications system according to any preceding claim, characterized in that the satellites are accessed using an FDMA access mode.

6. A communications system according to any one of claims 1 to 4, characterized in that the satellites are accessed using a TDMA access mode.

7. A communications system according to any one of claims 1 to 4, characterized in that the satellites are accessed using a CDMA access mode.
